# EUROPÄISCHE PATENTSCHRIFT

(11) **EP 0 763 918 B1**
(45) Veröffentlichungstag und Bekanntmachung des Hinweises auf die Patenterteilung: **23.04.2003**
(21) Anmeldenummer: 96114382.3
(22) Anmeldetag: 09.09.1996
(51) Int. Cl.: H04L 25/49, G11B 20/14, H03M 5/14

(54) **Verfahren und Schaltungsanordnung zur Erzeugung eines kanalcodierten Binärsignals**
Method and circuit for generating a channel-coded binary signal
Procédé et circuit pour la génération d'un signal binaire avec codage de canal

(30) Priorität: 14.09.1995 DE 19534048
(43) Veröffentlichungstag der Anmeldung: 19.03.1997
(73) Patentinhaber: DEUTSCHE THOMSON-BRANDT GMBH, 78048 Villingen-Schwenningen (DE)
(72) Erfinder: Scholz, Werner, 30989 Gehrden (DE)

(56) Entgegenhaltungen:
- US-A- 5 295 163
- US-A- 5 333 126

## Beschreibung

Die Erfindung betrifft ein Verfahren und eine Schaltungsanordnung zur Erzeugung eines kanalcodierten Binärsignals. Solche Signale werden vielfach zur Anpassung des Signalspektrums an den Übertragungskanal und zur Sicherstellung der Taktregenerierung am Kanalausgang eingesetzt.

### Stand der Technik

Für eine digitale Aufzeichnung von Daten, insbesondere von Audio- oder Videodaten, werden häufig binäre m/n-Codes angewendet. Bei diesen Codes werden jeweils m Datenbits als n-bit-Codewörter übertragen, wobei n > m ist. Der Zweck dieser Codierung ist normalerweise die Erzeugung eines DCfreien und Runlength-begrenzten Aufzeichnungssignals (RLL-Code). Die Runlength gibt hierbei die Anzahl aufeinanderfolgender Bits mit gleichem Wert an, durch eine Runlength-Begrenzung soll verhindert werden, daß die Runlength einen bestimmten Wert überschreitet.

Um eine Synchronisierung zu ermöglichen, werden in bestimmten Abständen spezielle Bitmuster zwischen die Codewörter eingetastet. Die Synchronisationsbitmuster werden so gewählt, daß ihre maximale Runlength die maximale Runlength im restlichen Signal übersteigt. Dadurch wird die Möglichkeit des unerwünschten Auftretens von Synchronbitmustern vermieden.

Im R-DAT-System wird z.B. ein 8/10-Code verwendet, bei dem den Datenbytes (8-bit-Datenwörtern) 10-bit-Codewörter zugeordnet sind. Die Codierung kann in diesem Fall mit Codetabellen durchgeführt werden.

Es werden vermehrt redundanzarme Codes angestrebt, die zwangsläufig verhältnismäßig lange Codewörter erfordern. Die Verwendung von Codetabellen ist dann nicht mehr zweckmäßig, da der Speicherbedarf für die Speicherung dieser Codetabellen mit der Länge der Codewörter erheblich ansteigt. Stattdessen erfolgt eine Codierung dann, indem zu jedem m-Bit-Datenwort mit Hilfe von Vorcodierungsschaltungen mehrere n-Bit-Codewörter erzeugt werden und aus den verschiedenen Codewörtern unter Berücksichtigung von Codierungsvorschriften und Spektralentscheidungen das optimale Codewort ausgewählt wird.

US-A-5 333 126 offenbart ein Aufzeichnungsverfahren, bei dem ein Runlength-kodiertes Signal erzeugt wird. Synchronisierungsmuster werden in regelmässigen Intervallen in das Signal eingefügt. Um ein DC-freies Signal zu erzeugen, wird entweder ein erstes Synchronisierungsmuster mit einer geraden Anzahl von "1"en oder ein zweites Synchronisierungsmuster mit einer ungeraden Anzahl von "1"en verwendet. Hierfür wird die Runlength des aufzuzeichnenden Signal mit Hilfe einer Runlength-Mess- und - Beurteilungsschaltung untersucht. In Abhängigkeit von dem Ergebnis wird ein Schalt-Code zu "0" oder "1" gewählt und dem Synchronisierungsmuster des aufzuzeichnenden Signal hinzugefügt.

### Erfindung

Der Erfindung liegt die Aufgabe zugrunde, ein Verfahren zur Erzeugung eines kanalcodierten Binärsignals anzugeben, bei dem eine Fehlentscheidung bei der Auswahl des optimalen Codewortes mit einfachen Mitteln ausgeschlossen werden kann ohne daß eine aufwendige Auswahllogik erforderlich ist. Diese Aufgabe wird durch das in Anspruch 1 angegebene Verfahren gelöst.

Der Erfindung liegt die weitere Aufgabe zugrunde, eine Schaltungsanordnung zur Anwendung des erfindungsgemäßen Verfahrens anzugeben. Diese Aufgabe wird durch die in Anspruch 4 angegebene Schaltungsanordnung gelöst.

Entsprechend der Codierungsvorschrift ist typischerweise die Spektralentscheidung für die Auswahl des optimalen Codewortes maßgeblich, solange die maximale Runlength einen vorgegebenen Maximalwert nicht überschreitet. Sofern das Ende eines Codewortes und der Beginn eines darauffolgenden Codewortes den gleichen Binärwert haben, kann es im Bereich der Synchronmustereintastung zu Fehlentscheidungen bei der Auswahl des optimalen Codewortes kommen. In diesem Fall kann die Summe aus der Runlength am Ende des zuvor gewählten Codewortes und der Runlength am Beginn des jeweils untersuchten Codewortes einen Wert erreichen, der mit dem großen Runlengthwert im Syncwort übereinstimmt. Dieses wird jedoch bei Verwendung einer einfachen Auswahllogik nicht registriert, da dieser Runlengthwert ohnehin im Bereich des Synchronmusters vorliegt.

Im Prinzip besteht das erfindungsgemäße Verfahren zur Erzeugung eines kanalcodierten Binärsignals, bei dem n-Bit-Codewörtern jeweils m Datenbits zugeordnet sind und in das Signal zur Synchronisierung dienende Bitmuster eingefügt werden, nun darin, daß eine Schaltung zur Ermittlung der Runlength durch Veränderung des zur Synchronisierung dienenden Bitmusters oder durch ein zusätzliches Pegelübergangserkennungssignal so beeinflußt wird, daß im Bereich der zur Synchronisierung dienenden Bitmuster ein verkleinerter Runlengthwert ermittelt wird.

Hierbei weisen die zur Synchronisierung dienenden Bitmuster eine Runlength auf, die größer ist als der maximale Runlengthwert, der für das übrige Signal angestrebt wird. Vorteilhaft werden nun die Bitmuster vor der zur Bestimmung der Runlength dienenden Schaltungseinheit in der Weise verändert, daß der maximale Runlenghtwert gleich oder kleiner als der für das übrige Signal angestrebte maximale Runlengthwert ist. Da die Schaltung zur Ermittlung der Runlength die Pegelübergänge im Bitstrom erkennt und die Bits zwischen aufeinander folgenden Pegelübergängen zählt, kann auch die Schaltung zur Erkennung der Pegelübergänge so beeinflußt werden, daß im Bereich der großen Runlength des Syncmusters ein zusätzlicher Pegelübergang registriert wird.

Vorzugsweise erfolgt die Beeinflussung der Runlengthermittlung etwa in der Mitte der großen Runlength durch die Invertierung eines Bits oder durch Erzeugung eines zusätzlichen Pegel-übergangserkennungssignals.

Im Prinzip besteht die erfindungsgemäße Schaltungsanordnung für ein Verfahren zur Erzeugung eines kanalcodierten Binärsignals darin, daß eine Schaltung Impulse erzeugt, die mit Hilfe eines vor einer zur Runlength-Prüfung dienenden Schaltungseinheit angeordneten EXOR-Gatters eine Binärwertumkehr von einem oder mehreren Bits des zur Synchronisierung dienenden Bitmusters bewirken oder zusätzliche Pegelübergangserkennungsimpulse darstellen.

Vorteilhaft werden die Impulse mit der Syncblockfrequenz fs erzeugt, wobei sie vorzugsweise im Bereich der großen Runlength des Syncmusters liegen.

Die Schaltungsanordnung kann hierbei zusätzlich eine Vorcodierungsschaltung, einen Block zur Erzeugung von zur Synchronisierung dienenden Bitmustern, einen Umschalter zur Einfügung von zur Synchronisierung dienenden Bitmustern in den Datenstrom, eine Schaltung zum Spektrumvergleich sowie Schaltungen zur Bestimmung und Auswahl des optimalen Codewortes aufweisen.

### Zeichnungen

Anhand der Zeichnungen werden Ausführungsbeispiele der Erfindung beschrieben. Diese zeigen in:
- Fig.1: ein Blockschaltbild einer erfindungsgemäßen Modulatorschaltung
- Fig.2: Datensignale mit eingetasteten Synchronisationsbitmustern (a, b, c, d) sowie mit erfindungsgemäß abgewandelten Synchronisationsbitmustern (e, f)

### Ausführungs-Beispiele

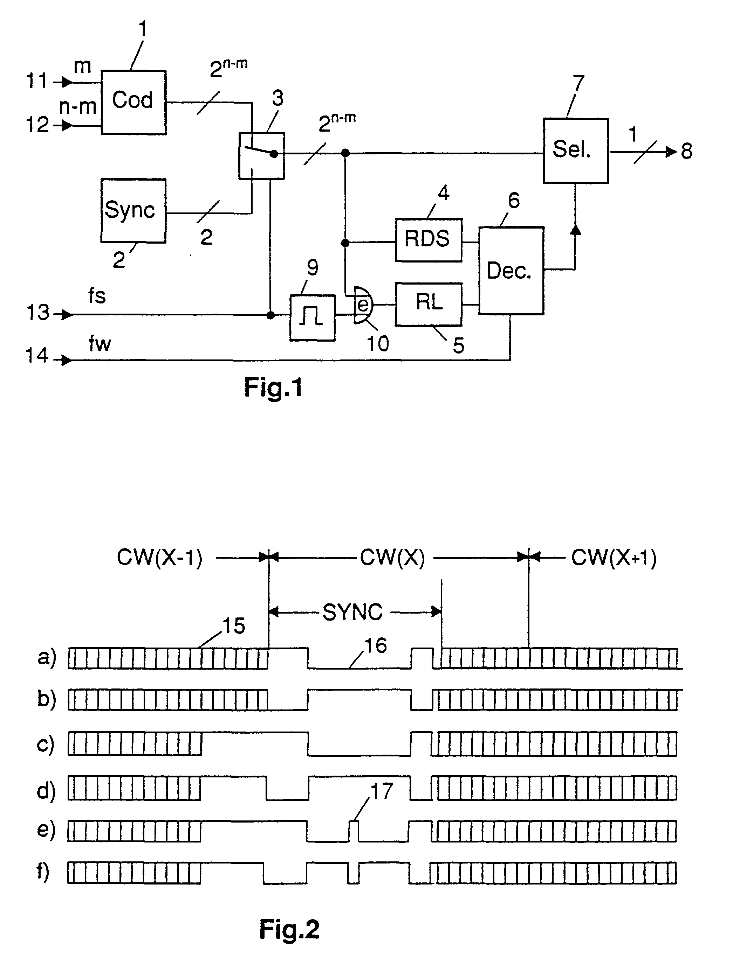

Das Blockschaltbild in Fig. 1 zeigt das Prinzip einer erfindungsgemäßen Modulatorschaltung zur Erzeugung eines m/n-Codes ohne Verwendung von Codiertabellen. Der Vorcodierungsschaltung 1 werden über einen Eingang 11 z. B. m Datenbits und über einen zweiten Eingang 12 z. B. n-m Zusatzbits zugeführt. Hieraus erzeugt die Vorcodierungsschaltung nun jeweils 2^{n-m} verschiedene n-bit-Codewörter. In durch die Syncblockfrequenz fs vorgegebenen Abständen werden in die Folge dieser Codewörter mittels eines Umschalters 3 Bitmuster eingefügt, die in dem Block 2 erzeugt werden und als Synchronisationssignal dienen.

Diese Binärsignale werden dann den Schaltungseinheiten 4 und 5 zugeführt, um die mit jedem Worttakt gebildeten 2^{n-m} Codewörter daraufhin zu untersuchen, welches Wort am bestem zur Erzeugung des m/n-codierten Signals geeignet ist. Der Block 4 ermittelt hierbei, welches der Codewörter zur geringsten Abweichung vom zur Erzeugung des Spektrums erforderlichen Verlauf der digitalen Summe führt. Die Schaltungseinheit 5 bestimmt für jedes Codewort den maximalen Runlength-Wert. Dabei wird auch die Summe aus der Runlength am Ende des zuvor gewählten Codewortes und der Runlength am Beginn des jeweils untersuchten Codewortes gebildet, sofern Ende und Beginn der beiden Codewörter den gleich Binärwert haben.

Soweit die Runlength-Werte die vorgegebene Runlength-Grenze nicht überschreiten, ist die Spektralentscheidung in Block 4 für die mit der Codewortfrequez fw erfolgende, endgültige Entscheidung im Block 6 maßgebend. Andernfalls hat die Runlength-Entscheidung in der Schaltungseinheit 5 Vorrang. Das ausgewählte Signal wird dann auf den Ausgang 8 der Auswahlschaltung 7 durchgeschaltet.

Um eine mögliche Fehlentscheidung bei der Auswahl des optimalen Codewortes zu verhindern, wird vor der Schaltungseinheit 5 eine Störung in das Synchronisationsmuster eingetastet. Hierfür wird mit der Syncblockfrequenz fs in der Stufe 9 ein Impuls erzeugt, der mit Hilfe des EXOR-Gatters 10 eine Binärwertumkehrung im Bereich der großen Runlength des Synchronisationsmusters bewirkt. Dadurch liegt die Runlength des Synchronisationsmusters vor der Auswahlschaltung deutlich unter der maximalen Runlength und hat damit keinen Einfluß auf die Codewort-Auswahl.

Diese Veränderung des Synchronisationsmusters ist in Fig. 2 dargestellt. Das Signal kann hierbei beispielsweise aus 25-bit-Codewörtern bestehen, wobei in das Codewort x ein 17-bit-Synchronisationsmuster eingefügt wird. Als Synchronisationsmuster werden vorzugsweise zwei zueinander inverse Bitmuster (Fig. 2a, 2b) vereinbart, wobei im Synchronisationsmuster ein verhältnismäßig großer Runlength-Wert vorkommt, der im übrigen Signal möglichst nicht erreicht oder überschritten werden soll.

Fig. 2c zeigt, daß in Bezug auf die maximale Runlength eine Fehlentscheidung möglich ist, wenn bei Auswahl der das Synchronisationsmuster enthaltenden Codewörter die maximale Runlength des Synchronisationsmusters noch an einer anderen Stelle eines Codewortes auftritt. Dieses kommt beim Signal in Fig. 2c dadurch zustande, daß durch die Verbindung des Synchronisationsmusters mit dem vorhergehenden Codewort eine Runlength entsteht, die mit der hier maximalen Runlength im Synchronisationsmuster übereinstimmt. Die Ermittlung der maximalen Runlength ergibt durch die Runlength im Synchronisationsbitmuster sowohl beim Signal nach Fig. 2c als auch beim Signal nach Fig. 2d den gleichen Wert 10. Das bei dem Signal entsprechend Fig. 2c die maximale Runlength noch ein zweites Mal vorliegt, kann bei Verwendung einer einfachen Auswahllogik nicht registriert werden. Da beim gleichem Wert der maximalen Runlength für beide Codewörter die Spektralentscheidung maßgeblich ist, kann es daher passieren, daß das Signal nach Fig. 2c gewählt wird, obwohl nach Codierungsvorschrift das Signal entsprechend Fig. 2d gewählt werden müßte.

In Fig. 2e und 2f sind die Signale dargestellt, die erfindungsgemäß der Schaltungseinheit 5 in Fig. 1 zur Runlength-Prüfung zugeführt werden. In diesem Beispiel wird die erfindungsgemäße Veränderung des Synchronisationsmusters dadurch erzielt, daß etwa in der Mitte der großen Runlength der Binärwert eines Bits umgekehrt wird. Durch diese Maßnahme wird dann hinsichtlich der maximalen Runlength eine eindeutige Entscheidung ermöglicht. Da nun nur noch das Signal aus Fig. 2e vor der Schaltungseinheit 5 den zu großen Runlength-Wert aufweist, während die Runlength für das Signal aus Fig. 2f deutlich geringer ist, wird nun korrekterweise das Signal entsprechend Fig. 2d in der Auswahlschaltung 7 ausgewählt und auf den Ausgang 8 durchgeschaltet.

Selbstverständlich kann eine Veränderung des Synchronisationssignals auch dadurch erfolgen, daß mehrere Bits invertiert werden, wobei es sich nicht zwangsläufig um die Bits in der Mitte der großen Runlength des Synchronisationsbitmusters handeln muß.

Die Erfindung kann z.B. in Geräten zur digitalen Aufzeichnung von Audio- und/oder Videodaten auf Magnetbändern, wie DVC, oder optischen Platten, wie CD oder DVD, verwendet werden.

## Patentansprüche

1. Verfahren zur Erzeugung eines kanalcodierten Binärsignals (15), das aus n-Bit-Codewörtern besteht, die jeweils m Datenbits zugeordnet sind, wobei in das Signal zur Synchronisierung dienende Bitmuster (16) eingefügt werden, **dadurch gekennzeichnet, daß** eine Schaltung zur Ermittlung der Runlength, welche zur Auswahl eines Korrekten Codewortes aus einem Satz vorkodierter Datenwörter verwendet wird, durch Veränderung des zur Synchronisierung dienenden Bitmusters oder durch ein zusätzliches Pegelübergangserkennungssignal so beeinflußt wird, daß im Bereich der zur Synchronisierung dienenden Bitmuster ein verkleinerter Runlengthwert ermittelt wird.

2. Verfahren nach Anspruch 1, **dadurch gekennzeichnet, daß** die zur Synchronisierung dienenden Bitmuster (16) eine Runlength aufweisen, die größer ist als der maximale Runlengthwert, der für das übrige Signal angestrebt wird und die Bitmuster (17) vor der zur Bestimmung der Runlength dienenden Schaltungseinheit (5) in der Weise verändert werden, daß der maximale Runlenghtwert gleich oder kleiner als der für das übrige Signal angestrebte maximale Runlengthwert ist.

3. Verfahren nach Anspruch 1 oder 2, **dadurch gekennzeichnet, daß** im mittleren Bereich des zur Synchronisierung dienenden Bitmusters ein Bit invertiert (17) wird.

4. Schaltungsanordnung für ein Verfahren zur Erzeugung eines kanalcodierten Binärsignals nach einem der Ansprüche 1 bis 3, mit einer Schaltungseinheit zur Bestimmung der Runlength (5), **dadurch gekennzeichnet, daß** eine Schaltung (9) Impulse erzeugt, die mit Hilfe eines EXOR-Gatters (10), welches vor der zur Runlength-Prüfung dienenden Schaltungseinheit (5), welche zur Auswahl eines Korrekten Codewortes aus einem Satz vorkodierter Datenwörter verwendet wird, angeordnet ist, eine Binärwertumkehr (17) von einem oder mehreren Bits des zur Synchronisierung dienenden Bitmusters bewirken.

5. Schaltungsanordnung nach Anspruch 4, **dadurch gekennzeichnet, daß** die Impulse mit der Syncblockfrequenz fs erzeugt werden und im Bereich der großen Runlength des zur Synchronisierung dienenden Bitmusters (16) liegen.

6. Schaltungsanordnung nach einem der Ansprüche 4 oder 5, **dadurch gekennzeichnet, daß** diese zusätzlich eine Vorcodierungsschaltung (1), einen Block (2) zur Erzeugung von zur Synchronisierung dienenden Bitmustern, einen Umschalter (3) zur Einfügung von zur Synchronisierung dienenden Bitmustern in den Datenstrom, eine Schaltung zum Spektrumvergleich (4) sowie Schaltungen zur Bestimmung (6) und Auswahl (7) des optimalen Codewortes aufweist.

## Claims

1. Method for the generation of a channel-coded binary signal (15), which is composed of n-bit code words which are respectively assigned to m data bits, bit patterns (16) serving for synchronization being inserted into the signal, **characterized in that** a circuit for determining the run length, which is used for selecting a correct code word of a set of pre-coded data words, is influenced by changing the bit pattern serving for synchronization or by an additional level transition identification signal, in such a way that a reduced run length value is determined in the region of the bit patterns serving for synchronization.

2. Method according to Claim 1, **characterized in that** the bit patterns (16) serving for synchronization have a run length which is greater than the maximum run length value which is aimed at for the rest of the signal, and the bit patterns (17) are changed upstream of the circuit unit (5) serving to determine the run length, in such a way that the maximum run length value is less than or equal to the maximum run length value which is aimed at for the rest of the signal.

3. Method according to Claim 1 or 2, **characterized in that** a bit is inverted (17) in the middle region of the bit pattern serving for synchronization.

4. Circuit arrangement for a method for the generation of a channel-coded binary signal according to one of Claims 1 to 3, having a circuit unit for determining the run length (5), **characterized in that** a circuit (9) generates pulses which, with the aid of an EXOR gate (10) arranged upstream of the circuit unit (5), which is used for selecting a correct code word of a set of pre-coded data words, serving to check the run length, effect a binary value inversion (17) of one or more bits of the bit pattern serving for synchronization.

5. Circuit arrangement according to Claim 4, **characterized in that** the pulses are generated at the sync block frequency fs and are situated in the region of the large run length of the bit pattern (16) serving for synchronization.

6. Circuit arrangement according to either of Claims 4 and 5, **characterized in that** it additionally has a precoding circuit (1), a block (2) for generating bit patterns serving for synchronization, a changeover switch (3) for inserting bit patterns, serving for synchronization, into the data stream, a circuit for spectrum comparison (4) and circuits for the determination (6) and selection (7) of the optimum code word.

## Revendications

1. Procédé pour générer un signal binaire codé par canal (15) qui se compose de mots de code de n bits qui sont à chaque fois associés à m bits de données, des modèles binaires (16) servant à la synchronisation étant insérés dans le signal, **caractérisé en ce qu'**un circuit de détermination de la longueur de plage, laquelle est utilisée pour sélectionner un mot de code correct à partir d'un ensemble de mots de données pré-codés, est influencé en modifiant le modèle binaire servant à la synchronisation ou par le biais d'un signal de détection de changement de niveau supplémentaire de telle manière à déterminer une valeur de longueur de plage plus petite dans la zone du modèle binaire servant à la synchronisation.

2. Procédé selon la revendication 1, **caractérisé en ce que** les modèles binaires (16) servant à la synchronisation présentent une longueur de plage qui est supérieure à la valeur de longueur de plage maximale qui est visée pour le reste du signal et les modèles binaires (17) sont modifiés avant l'unité de circuit (5) servant à déterminer la longueur de plage de telle manière que la valeur de longueur de plage maximale soit égale ou inférieure à la valeur de longueur de plage maximale visée pour le reste du signal.

3. Procédé selon la revendication 1 ou 2, **caractérisé en ce qu'**un bit est inversé (17) dans la zone centrale du modèle binaire servant à la synchronisation.

4. Arrangement de circuit pour un procédé pour générer un signal binaire codé par canal selon l'une des revendications 1 à 3, muni d'une unité de circuit pour déterminer la longueur de plage (5), **caractérisé en ce qu'**un circuit (9) génère des impulsions qui, à l'aide d'une porte EXOR (10) disposée avant une unité de circuit (5) servant à contrôler la longueur de plage, laquelle est utilisée pour sélectionner un mot de code correct à partir d'un ensemble de mots de données pré-codés, effectuent une inversion de valeur binaire (17) d'un ou de plusieurs bits du modèle binaire servant à la synchronisation.

5. Arrangement de circuit selon la revendication 4, **caractérisé en ce que** les impulsions sont générées à la fréquence du bloc de synchronisation fs et se trouvent dans la zone de la grande longueur de plage du modèle binaire (16) servant à la synchronisation.

6. Arrangement de circuit selon l'une des revendications 4 ou 5, **caractérisé en ce que** celui-ci présente en plus un circuit de pré-codage (1), un bloc (2) destiné à générer des modèles binaires servant à la synchronisation, un inverseur (3) pour insérer des modèles binaires servant à la synchronisation dans le train de données, un circuit de comparaison de spectre (4) ainsi que des circuits pour déterminer (6) et sélectionner (7) le mot de code optimal.
